# EUROPEAN PATENT APPLICATION

(11) **EP 2 615 544 A1**
(43) Date of publication of application: **17.07.2013**
(21) Application number: 11000607.9
(22) Date of filing: 26.01.2011
(51) Int. Cl.: G06F 9/445

(54) **A method for implementation of a software platform**

(71) Applicant: Job and Esther Technologies Ltd., 00240 Helsinki (FI)
(72) Inventor: Kero, Markku, 00240 Helsinki (FI)

(57) **Abstract**

A method for implementing a software system is described, wherein the system provides a software platform on top of which application software can be developed. This platform specifically allows the applications to continue to function unmodified even when the platform itself is modified; it allows the applications to be compiled without having all utilized software components present at compile time; it also allows for dynamic loading of software components in runtime, and provides a possibility for applications to gain new features and functionalities that were unknown or unavailable when the application was created and compiled; further, the invention describes a way to allow applications to execute on various different kinds of devices, processors and environments (eg. Computers, mobile phones and/or embedded systems) without requiring any modifications for the applications themselves.

## Description

### FIELD OF THE INVENTION

The present invention relates to the field of software engineering, software platforms and operating systems. In particular, the invention relates to a method of implementation of a software platform or operating system that allows additonal software ("applications") to be developed on top of the platform, maintaining application compatibility across platform updates and upgrades, and allowing these applications to be dynamically extended in runtime with components potentially unknown during application creation, while maintaining native code performance. The invention relates to multiple fields of technology where software can be executed on a microprocessor, such as (but not limited to) mobile and handheld devices, computers, embedded systems and other software-enabled devices, and is used to govern the general operation and maintenance of the device and its purpose of use.

### BACKGROUND OF THE INVENTION

Traditionally an operating system provides a software platform that allows software applications to be written that will operate on top of the operating system. Commonly an operating system in this manner provides an interface (API) for application programmers that allows native code access (programming for the instruction set of the processor of the computer or device) to the system and the underlying hardware. This native code access and API is commonly, further, made accessible by means of the assembly language (directly writing code for the instruction set of the processor) or the C (or C-like) language. Often an operating system in this manner provides system libraries that are made available to the programmer, and that can be linked with third-party applications in order for the applications to utilize the software platform and to thus communicate with the hardware on which they are being executed. Most, if not all, current operating systems, provide their native low-level software development platform in this manner.

Scripting languages are commonly used to provide a higher-level platform to developers, allowing them to write more dynamic code in a more productive manner. In this approach, the runtime interpretation of the applications allows for more dynamic functionality (eg. inclusion of code and components not known or not available during development), and helps to further isolate the programming interface even if the underlying operating system undergoes updates. Often this comes at the expense of execution performance, however.

Recently the use of virtual machine technology and related programming languages, through the use of technologies such as Java and C#, has attempted to provide a hybrid solution between the dynamic, higher level nature of scripting and the low-level operating system and native code.

In all these approaches, the concept of API- and ABI- compatibility is of great importance to application developers. Traditionally, as the underlying software platform (either native, scripting or virtual machine -based) undergoes updates, upgrades and other changes, the programming interface changes, forcing applications to be modified in order for them to continue to work on the platform.

One proposed solution for this kind of a problem has been the use of commonly known interfaces that have been decoupled from the actual implementation, thus allowing the implementation to be changed independently of the interface, thus maintaining interface compatibility for applications even if the implementations were to undergo upgrades. This is sometimes also referred to as component programming.

There are benefits and drawbacks to each of the existing solutions mentioned. While native code development platforms inherently offer the best performance, the use of shared libraries and header files often establish a very unstable development platform where binary compatibility breaks often if the implementation of the libraries is modified. This is best seen in the complete lack of source and binary compatibility between various Linux/Unix implementations, which all provide their primary development platforms through this mechanism. This is also seen in other operating system implementations, where an upgrade or change to a system library will cause applications to crash unless they are recompiled or modified to support the new version. On the other hand, scripting and virtual machine approaches add a layer of code that helps in order to maintain compatibility, but this comes at the expense of adding complexity to the system, and thus with an inherent runtime performance penalty. Shared interface definitions and component programming in themselves have also not been able to solve the problem of providing a stable software platform.

It is also widely understood that software platforms where applications are compiled (such a C, C++, Java, C#, for both native and virtual machine based platforms) and that are strongly typed, dynamic addition of functionality to compiled applications in runtime or at any time after compilation is either very difficult or not possible at all. Usually the libraries, code and outside components that are utilized by the applications are linked to the programs at compile time (or must at least be existing, present and available), and in order to add functionality at a later time, the applications need to be recompiled and possibly modified. Scripting languages, on the other hand, often allow highly dynamic and flexible constructs due to their interpreted nature.

### SUMMARY OF THE INVENTION

The present invention was made in view of the prior art described above, and provides a design for a software platform that allows the utilization of processor native code for optimal performance of software execution, but also provides a mechanism that allows for dynamic inclusion of components during application execution (runtime) that allows programs to be extended even after being compiled, by dynamic inclusion of outside modules. This design, further, provides for a stable software platform that offers both source and binary compatibility for applications, allowing the platform to be updated, upgraded and changed without affecting the stability or functionality of the applications.

This invention, thus, when utilized and applied in physical devices and systems, such as (for example) computers, handheld devices or various kinds of embedded systems and devices, provides a technical solution for the problem of maintaining application compatibility across different versions of the platform itself, providing a longer lifespan for both the device and the applications it can execute; further, due to the dynamic loading features provided by the invention, it also provides a solution that allows applications to later on gain features and functionality that were not yet existing or expected when the applications were first created and compiled; yet, it also provides a solution wherein applications created for one type of a device (eg. a computer) can become instantly compatible with another kind of a device (eg. a mobile phone) without being modified at all.

To provide these functionalities, the present invention provides a mechanism for loading functionality (program code) from dynamically loadable modules from where a calling program can instantiate objects that are instances of certain classes (in accordance with standard object oriented programming principles and terminology), while the classes themselves (and their specific implementation) remain internal to the module. Different modules, then, can communicate with objects from other modules via a number of common, publicly declared interfaces, provided as an interface library, and/or a shared runtime environment. This is in contrast with other commonly used software platforms that provide class libraries instead of interface libraries (the difference being, a class library includes the implementation of the functionality, wherein an interface library only provides the interface, not implementation). Furthermore, a facility can be included in the platform that allows different kinds of program code to be loaded dynamically; the code may be (in the simplest case) readily in the native code format and instruction set of the device or computer (readily executable by the processor), but may also be in the format of some other platform/processor, and/or in an intermediate format. In such cases, a facility may be implemented as part of this invention that allows these code formats and instruction sets to be automatically converted to the native format executable on the current processor; this conversion may take place upon loading of the module, or can be done at some other point in time prior to the module being loaded (eg. at the time of application installation). The native code resulting from this conversion may also be cached in order for faster loading time on subsequent executions.

### BRIEF DESCRIPTION OF THE DRAWINGS

Figure 1 briefly illustrates the components of the software platform and their dependencies with each other;
Figure 2 describes the procedure of executing an application through the runtime environment of the software platform;
Figure 3 describes in detail the procedure of instantiating objects based on their class names;

### DETAILED DESCRIPTION OF THE INVENTION

With reference to the attached drawings, an implementation of the invention is now described in detail.

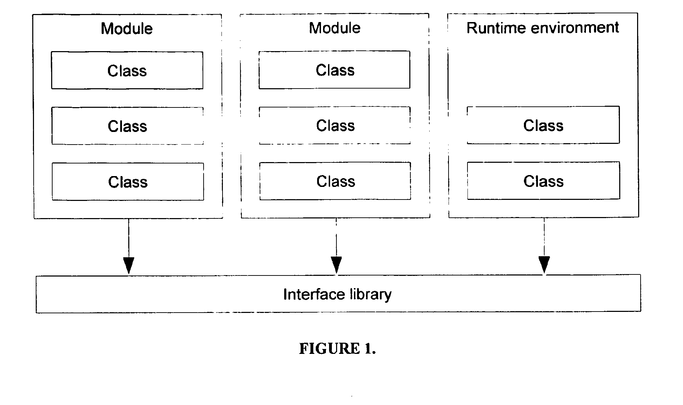

As shown in Figure 1, the logical components of the system herein are represented as an interface library, a runtime environment and a plurality of modules, with each module able to contain one or more classes (note that while the interface library and the runtime environment are specifically described as single logical components here, either one of them may in practice be implemented as several libraries and/or executables; the interface library in such implementations may specifically contain also other code, functions and definitions aside from the interfaces it provides). The runtime environment itself can provide classes as well, thus also functioning as a kind of module. As is also shown in Figure 1, each module, as well as the runtime environment, is only dependent on the interface library during compile time; all other modules may be added in runtime, and do not need to be present or available during compilation of other modules, even if these modules would have runtime dependencies on each other.

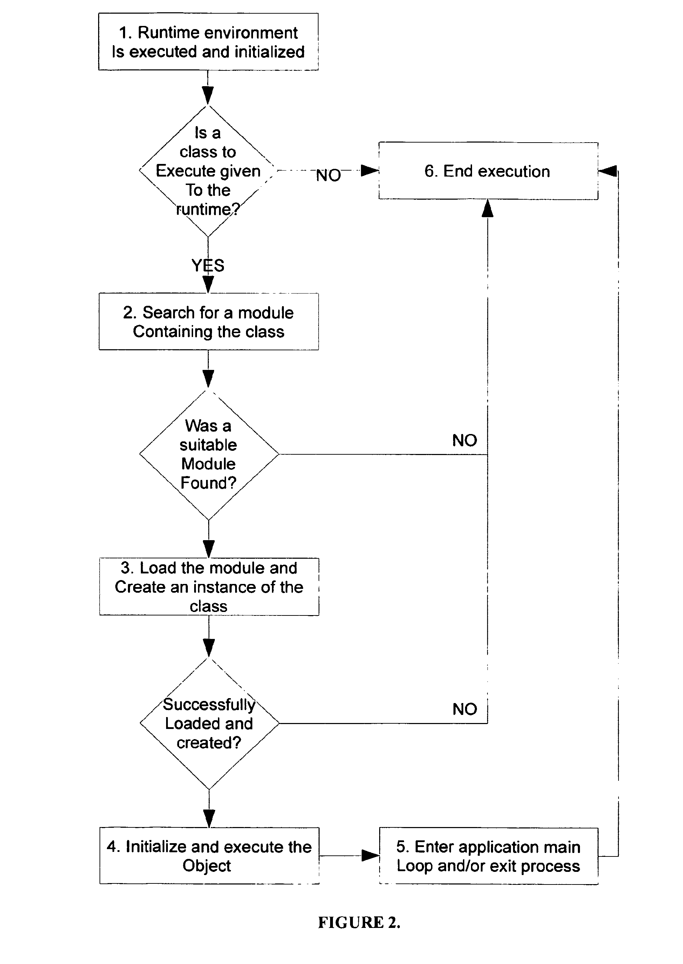

As described further, then, in Figure 2, upon execution of an application program, the runtime environment is executed first (step 1 in the drawing); for the purposes of executing a program, the runtime environment can then be given a name of a class to execute. Based on the name of the class, the runtime then loads an appropriate module (steps 2-3). Upon deciding how to execute a class, the runtime environment can then detect if the class implements certain interfaces, and then act accordingly (step 4). For example, if a class implements a graphical widget interface, the runtime environment can utilize another module to open a GUI window (or some other corresponding component that represents a way to display graphics) and display the object as a user interface component; or if the class to execute implements an interface that signifies that it is "executable", an "execute" method on the class can be called. The created object can also instantiate other classes from other modules during its initialization; any of these created objects can consequently register themselves with the "main loop" of the runtime environment that provides standard services such as timers as well as event passing and waiting capabilities. Lastly in the process, when initialization is done successfully, the application main loop is started (step 5); the main loop may decide to exit immediately if no object registered themselves with the main loop during the initialization.

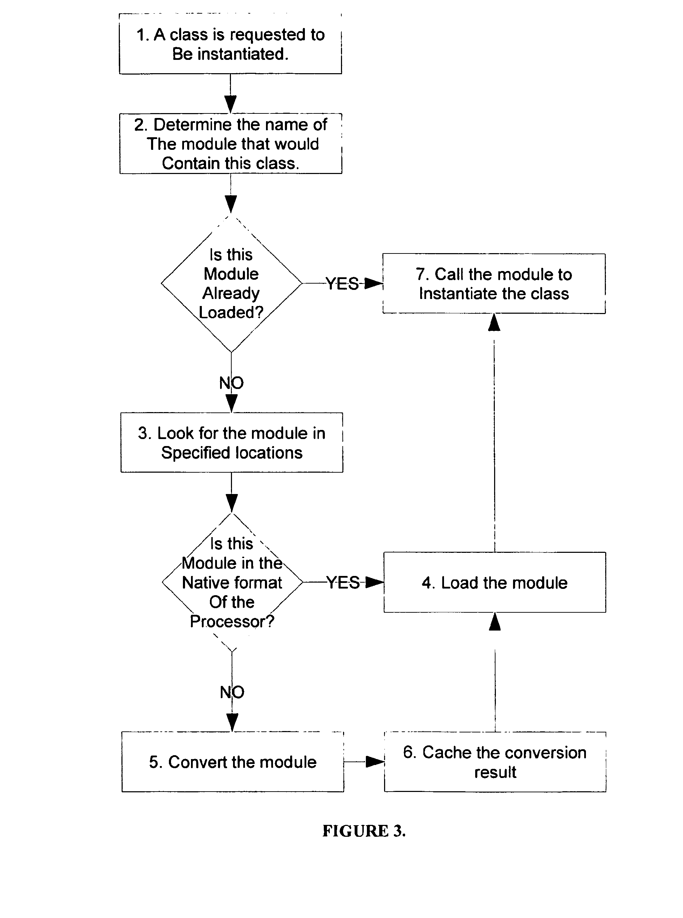

Figure 3 provides additional details with regards to steps 2-3 of the procedure described in Figure 2 (searching and loading a module and instantiating a class from a module). However, it should be noted that this procedure (instantiating a class, ie. creating an object) can also be called elsewhere, not only as a part of the execution procedure of the runtime environment. Specifically, the interface library (possibly in cooperation with the runtime environment) may provide a facility for all modules to instantiate classes from other modules, in which case this procedure could also be followed in these cases.

As part of the procedure described in Figure 3, the module name for a class can be determined (step 2 in the drawing) by observing the full name of the class, and can be implemented in various ways depending on the specific requirement. A common convention is to use the reverse-url notation to denote the module name, followed by the name of the class itself: For example, a class named "com.mydomain.MyClass" would be considered to be part of a module called "com.mydomain", referring to a class called "MyClass" in this module.

Once the name of the module is determined, as is shown in Figure 3, the module can be searched for in several locations, including (but not limited to) a list of directories on the local storage of the system (step 3). Once a module with the given name is located, if such a facility is provided in the implementation of the system, the system may be able to convert the module to the native code format (or instruction set) of the current system if it is currently in some other format (step 5); the results of this conversion can be saved locally in a cache to speed up future loading of the module (step 6). Once the module is determined to match the currently running system, it can be loaded (step 4), and the module can be queried for an instance of the desired class (step 7). The precise manner of how to query the module for an instance can be implemented in a variety of ways; for example, if modules were to be implemented as dynamically loadable shared libraries, the module library could export a symbol named after the classname to be instantiated; this symbol could then point to a function that returns a newly allocated instance of the class in question.

## Claims

1. A software platform composed of an interface library, a runtime environment and dynamically loadable modules.

2. System of claim 1 where the runtime environment and modules need to depend only on the interface library at compilation time.

3. System of claim 1 where modules can be loaded dynamically by the runtime environment when classes need to be instantiated.

4. System of claim 3 where suitable modules can be searched from several locations, including a list of directories in the local storage.

5. System of claim 3 where the interface library may provide a mechanism for objects to create instances of classes from other modules.

6. System of claim 1 where modules can utilize and interact with objects from other dynamically loaded modules by utilizing the interfaces implemented by these objects.

7. System of claim 1 where the modules can be either in the native instruction set of the device or computer, in the native instruction set of some other platform, and/or in an intermediate format, and where the system is able to convert the module to the native instruction set of the platform upon execution or prior to execution.

8. System of claim 7 where the results of the conversion may be saved to a cache.

9. System of claim 1 where the runtime environment determines how to execute an object based on the interfaces implemented by the object.
